# FASCICULE DE BREVET EUROPEEN

(11) **EP 3 286 529 B1**
(45) Date de publication et mention de la délivrance du brevet: **04.03.2020**
(21) Numéro de dépôt: 16721461.8
(22) Date de dépôt: 20.04.2016
(51) Int. Cl.: G01F 1/66, G01F 15/00, G01F 15/06, G01F 15/18, E03B 9/02, F16K 37/00

(54) **VANNE INCORPORANT UN DÉBITMÈTRE POUR LA MESURE D'UN DÉBIT DE FLUIDE À L'INTÉRIEUR DE LA VANNE**
VENTIL MIT EINEM DURCHFLUSSMESSER ZUR MESSUNG EINES DURCHFLUSSES EINES FLUIDS IM INNEREN DAVON
VALVE INCORPORATING A FLOWMETER FOR MEASURING A FLOW OF FLUID INSIDE SAME

(30) Priorité: 23.04.2015 FR 1553673
(43) Date de publication de la demande: 28.02.2018
(73) Titulaire: Integra Metering SAS, 31700 Blagnac (FR)
(72) Inventeur: POQUE, Mathieu, 31290 Villefranche-de-Lauragais (FR); RAMOND, Alain, 31000 Toulouse (FR)
(74) Mandataire: Cabinet BARRE LAFORGUE & associés
(86) Numéro de dépôt international: PCT/FR2016/050923
(87) Numéro de publication internationale: WO 2016/170270

(56) Documents cités:
- EP-A1- 0 481 141
- DE-U1-202008 003 584
- JP-A- H0 814 974
- JP-A- H11 201 790

## Description

L'invention concerne une vanne ou bouche d'incendie incorporant un débitmètre.

Un débitmètre est un dispositif permettant de mesurer la vitesse d'écoulement d'un fluide c'est-à-dire d'un liquide ou d'un gaz, ou encore d'un mélange liquide gazeux. On connaît en particulier des débitmètres présentant des dispositifs de mesure de débit nécessitant une liaison électrique. Il s'agit notamment de débitmètres à transducteurs, en particulier à transducteurs ultrasonores permettant de mesurer la vitesse d'écoulement d'un fluide en utilisant la durée de propagation d'ondes ultrasonores dans le fluide. Cependant, ces débitmètres nécessitent l'établissement d'une liaison électrique entre le débitmètre et l'environnement extérieur à l'écoulement du fluide avec lequel le débitmètre est en contact, ce qui, dans certaines configurations et/ou applications, peut poser des problèmes particuliers. Le problème se pose aussi d'incorporer un débitmètre à l'intérieur même d'une vanne telle qu'une bouche d'incendie.

En outre, les débitmètres à transducteurs ultrasonores peuvent présenter des performances dégradées lorsqu'ils sont placés dans un environnement extrême tel que l'intérieur d'une vanne ou d'une canalisation dans laquelle s'écoule un fluide de façon turbulente. Les forces dues à l'écoulement du fluide s'exerçant alors sur les transducteurs peuvent déformer et/ou fragiliser les transducteurs, et ainsi fausser leurs mesures et/ou diminuer leur durée de vie. Or, les opérations de maintenance et/ou de remplacement de tels dispositifs sont souvent particulièrement complexes et coûteuses, notamment lorsque le dispositif est installé sur une conduite difficile d'accès, par exemple souterraine ou immergée, et imposent l'interruption de l'écoulement et de l'installation correspondante.

Une vanne est un dispositif qui permet de réguler l'écoulement d'un fluide. Une vanne permet ainsi d'arrêter et de modifier le débit d'un fluide. Par exemple, une bouche d'incendie (ou bouche à incendie) est une vanne dont l'utilisation principale consiste à approvisionner en eau, en urgence, les sapeurs-pompiers afin de lutter contre un incendie.

La mesure du débit de l'écoulement d'eau délivré par une bouche d'incendie s'avère utile pour s'assurer du bon fonctionnement de cette bouche d'incendie. Il peut également être utile de contrôler constamment le débit de l'écoulement d'eau dans la bouche d'incendie pour envoyer un signal d'alarme si une utilisation anormale est constatée. Une utilisation anormale d'une bouche d'incendie peut être constatée lors d'un vol d'eau ou après qu'une bouche d'incendie ait été accidentée et qu'elle subisse ainsi une fuite d'eau.

On connaît déjà plusieurs types de débitmètres permettant de mesurer une vitesse d'un écoulement d'eau délivré par une bouche d'incendie. Certains de ces débitmètres sont placés en sortie (prise d'eau) de la bouche d'incendie. Ces débitmètres connus sont utilisés pour des contrôles ponctuels afin de vérifier le bon fonctionnement de la bouche d'incendie. Cette disposition implique plusieurs inconvénients. En effet, pour chaque contrôle, le débitmètre doit être assemblé puis démonté entraînant ainsi une perte considérable de temps. De plus, si un tel débitmètre reste assemblé à l'extérieur d'une bouche d'incendie, il présente alors un risque de dégradation (accident, vandalisme).

CN203412037 décrit un dispositif d'alarme enterré automatique pour bouche d'incendie comprenant un débitmètre disposé sur la canalisation souterraine assemblée à la bouche d'incendie, une unité de contrôle et un système de communication. La maintenance du débitmètre d'un tel dispositif n'est pas aisée car le sol doit être creusé afin d'accéder au débitmètre.

DE 20 2008 003584 décrit un dispositif de mesure de débit d'un fluide comprenant une tige comprenant des transducteurs piézoélectriques et adaptée pour recevoir un fluide afin de mesurer son débit. La tige peut être utilisée comme une tige de commande d'un obturateur d'une vanne. Un tel dispositif de mesure de débit présente une structure complexe et dépendante de la vanne à laquelle le dispositif de mesure de débit est associé.

L'invention vise donc à pallier l'ensemble de ces inconvénients.

Elle vise donc de façon générale à proposer un débitmètre adapté pour être installé simplement et incorporé dans une vanne telle qu'une bouche d'incendie, ou une canalisation telle qu'une conduite d'eau.

L'invention vise en particulier à proposer un tel débitmètre pouvant être installé simplement, et en particulier à l'intérieur d'une vanne telle qu'une bouche d'incendie ou une canalisation telle qu'une conduite d'eau, tout en pouvant être changé ou réparé facilement.

L'invention vise plus particulièrement à proposer un tel dispositif qui soit robuste et compatible avec un environnement extérieur agressif, notamment qui puisse être enterré ou immergé.

L'invention vise en particulier à proposer un tel débitmètre qui délivre des signaux de mesure fiables et précis quelles que soient la nature de l'écoulement du fluide et les variations éventuelles de ce dernier (qui peuvent éventuellement être brusques et de grandes amplitudes), et dont la durée de vie est améliorée.

L'invention vise plus particulièrement à proposer un tel dispositif qui soit complètement autonome dans son fonctionnement, préréglé à la fabrication, et dont les réglages et/ou les caractéristiques ne sont pas susceptibles de varier en fonctionnement, y compris du fait de son utilisation dans des environnements fortement perturbés (écoulements à haute vitesse et/ou turbulents...).

L'invention vise également à proposer un tel dispositif qui soit simple, peu coûteux à la fabrication, et comporte un faible nombre de pièces.

L'invention vise plus particulièrement à proposer un tel débitmètre adapté pour être incorporé dans une vanne comprenant un dispositif de mesure de vitesse d'écoulement d'un fluide comprenant au moins un transducteur à ultrasons.

L'invention vise à proposer une vanne -notamment en particulier mais non exclusivement une bouche d'incendie- incorporant au moins un débitmètre. Elle vise plus particulièrement à proposer une telle vanne incorporant au moins un débitmètre présentant les avantages mentionnés ci-dessus.

Pour ce faire, l'invention concerne une vanne selon la revendication 1 intégrant un débimètre comprenant :
- un corps tubulaire présentant deux extrémités axiales,
- un dispositif de mesure de débit porté par le corps tubulaire,
- une liaison électrique s'étendant à l'extérieur du corps tubulaire,
caractérisé en ce que :
- le dispositif de mesure de débit est associé au corps tubulaire de façon à permettre la mesure d'un débit de fluide s'écoulant à l'extérieur du corps tubulaire,
- ladite liaison électrique traverse le corps tubulaire par au moins une traversée étanche au fluide.

En particulier, avantageusement et selon l'invention, le corps tubulaire est étanche au fluide et renferme au moins un circuit électronique du dispositif de mesure de débit. Ainsi, l'étanchéité du corps tubulaire permet de l'immerger totalement dans le fluide.

En outre, avantageusement et selon l'invention, au moins l'une -notamment une seule- des extrémités axiales dudit corps tubulaire comprend une traversée étanche au fluide pour la liaison électrique. Cette traversée étanche permet de transmettre les signaux émis par un transducteur du débitmètre à l'extérieur sans que la liaison électrique soit au contact du fluide, notamment d'un milieu humide.

Par ailleurs, avantageusement et selon l'invention, ledit dispositif de mesure de débit comprend au moins un transducteur ultrasonore - notamment au moins deux transducteurs ultrasonores en vis-à-vis- comprenant une extrémité proximale assemblée audit corps tubulaire et s'étendant à l'extérieur dudit corps tubulaire jusqu'à une extrémité distale dudit transducteur. Ainsi, les mesures de vitesses d'écoulement d'un fluide à l'extérieur du corps tubulaire peuvent être réalisées de façon simple, fiable, et précise par voie ultrasonore.

Un transducteur ultrasonore comprend une coque rigide renfermant différents composants assurant le fonctionnement du transducteur. L'extrémité distale du transducteur est donc l'extrémité distale de la coque rigide du transducteur. De même, l'extrémité proximale du transducteur est l'extrémité proximale de la coque rigide du transducteur.

Avantageusement et selon l'invention, le dispositif de mesure est agencé pour permettre la mesure d'un débit de fluide s'écoulant le long du corps tubulaire.

Dans certains modes de réalisation et selon l'invention, ledit corps tubulaire est un corps tubulaire droit s'étendant selon un axe passant par les deux extrémités axiales. Dans ces modes de réalisation, avantageusement et selon l'invention, chaque transducteur ultrasonore s'étend globalement orthogonalement à l'axe dudit corps tubulaire. Il est assemblé au corps tubulaire par fixation dans un orifice de la paroi du corps tubulaire s'étendant orthogonalement à l'axe du corps tubulaire, c'est-à-dire radialement.

Par ailleurs, de préférence, le débitmètre comprend un étrier d'assemblage de l'extrémité distale de chaque transducteur (c'est-à-dire de sa coque rigide) audit corps tubulaire. Les inventeurs ont constaté que le simple fait d'assembler l'extrémité distale d'un transducteur au corps par un étrier d'assemblage, améliore la rigidité du dispositif de mesure de débit. En outre, il peut procurer un assemblage de type hyperstatique lorsque le transducteur est par ailleurs encastré dans le corps par son extrémité proximale. Un tel assemblage de type hyperstatique permet en particulier, d'une part, de réduire considérablement les erreurs dans le signal de mesure, et d'autre part, d'améliorer la liaison mécanique entre le transducteur et le corps, et, ce faisant, d'augmenter la durée de vie du dispositif. En particulier, un tel assemblage hyperstatique permet de limiter les vibrations de chaque transducteur sous l'effet des phénomènes transitoires tels que l'établissement ou l'interruption de l'écoulement du fluide ou d'éventuelles turbulences dans l'écoulement du fluide. En outre, le dispositif peut être réglé précisément à la fabrication, et ces réglages ne sont pas perturbés en fonctionnement.

L'assemblage entre l'extrémité distale d'un transducteur et le corps a pour fonction d'empêcher les déplacements relatifs de cette extrémité distale par rapport au corps (et donc par rapport à son extrémité proximale) selon au moins une direction orthogonale à la direction longitudinale du transducteur, c'est-à-dire d'empêcher les déformations en flexion du transducteur correspondant à un déplacement de l'extrémité distale au moins selon ladite direction orthogonale. Un tel débitmètre est destiné à être placé en contact avec un écoulement de fluide s'écoulant selon une direction d'écoulement par rapport au corps. Avantageusement et selon l'invention, le transducteur est agencé par rapport au corps de telle sorte que sa direction longitudinale soit sécante avec l'écoulement de fluide, et donc avec la direction d'écoulement du fluide par rapport au corps. Avantageusement et selon l'invention, cet assemblage entre l'extrémité distale et le corps est adapté pour fixer rigidement l'extrémité distale par rapport au corps au moins selon toute direction parallèle à la direction d'écoulement du fluide par rapport au corps. De préférence, l'assemblage entre l'extrémité distale et le corps est adapté pour fixer rigidement l'extrémité distale par rapport au corps dans toute direction orthogonale à la direction longitudinale, c'est-à-dire pour empêcher toute déformation en flexion du transducteur correspondant à un déplacement de l'extrémité distale par rapport à l'extrémité proximale.

Avantageusement et selon l'invention, chacune des deux extrémités axiales du corps tubulaire est agencée pour pouvoir être accouplée solidaire en rotation d'une tige. En outre, avantageusement et selon l'invention, le corps tubulaire peut être adapté pour pouvoir transmettre des efforts -notamment des efforts de rotation et/ou de translation longitudinale- entre ses deux extrémités axiales. Ainsi, un tel débitmètre présente une double fonction : non seulement il fait office de débitmètre permettant la mesure de l'écoulement du fluide, mais également il constitue un organe de transmission d'efforts -notamment en rotation et/ou en translation longitudinale- entre un organe mené et un organe menant, par exemple un actionneur de vanne et un obturateur de vanne.

L'invention a pour objet une vanne conforme à la revendication 1.

Avantageusement une vanne selon l'invention est aussi caractérisée en ce l'obturateur est un obturateur rotatif et en ce que le débitmètre est adapté pour pouvoir transmettre des mouvements de rotation entre un actionneur de la vanne et l'obturateur.

Pour ce faire, selon l'invention une première extrémité axiale du débitmètre -notamment du corps tubulaire- est assemblée à un organe menant, et une seconde extrémité axiale du débitmètre est assemblée à un organe mené d'entraînement de l'obturateur.

Selon l'invention une première extrémité axiale du débitmètre -notamment du corps tubulaire- est assemblée à une extrémité d'une première tige de commande, dite tige de commande menante, accouplée à un actionneur de la vanne, et une seconde extrémité axiale du débitmètre -notamment du corps tubulaire- est assemblée à une extrémité d'une seconde tige de commande, dite tige de commande menée, accouplée à l'obturateur. Les assemblages entre l'actionneur, les tiges de commande, le débitmètre et l'obturateur forment une transmission mécanique permettant de commander les déplacements en position de l'obturateur sous l'effet de la manœuvre de l'actionneur, et donc de contrôler l'écoulement du fluide dans la vanne par l'obturateur grâce à une simple rotation de l'actionneur. De plus, un tel débitmètre peut être assemblé à n'importe quelle vanne incorporant au moins une tige tubulaire agencée dans la vanne pour pouvoir être au contact d'un fluide.

Par ailleurs, avantageusement une vanne selon l'invention est aussi caractérisée en ce qu'au moins la tige de commande menante est une tige tubulaire et en ce que ladite liaison électrique du débitmètre s'étend dans la tige de commande menante tubulaire. Ainsi, la liaison électrique du débitmètre jusqu'à l'extérieur de la vanne peut être réalisée de façon simple et fiable et sécurisée sans risque de détérioration ou de court-circuit.

En particulier, une vanne selon l'invention est une bouche d'incendie. Avantageusement et selon l'invention, la tige et le débitmètre sont agencés dans le corps de la bouche d'incendie afin de faciliter leur assemblage ainsi que la maintenance du débitmètre. En effet, le débitmètre est placé au cœur d'une partie hors-sol (non enterrée) de la bouche d'incendie. Cette partie de la bouche d'incendie peut être démontée du reste du corps de la bouche d'incendie permettant ainsi d'accéder simplement à la tige tubulaire de commande incorporant le débitmètre ainsi qu'au débitmètre dans le cas d'une maintenance. Un tel agencement ne nécessite donc pas en particulier de creuser le sol afin d'accéder au débitmètre. En outre, le débitmètre incorporé à l'intérieur même du corps de la bouche d'incendie est protégé des agressions extérieures et est sécurisé. Une vanne selon l'invention peut aussi faire l'objet d'autres applications que pour une bouche d'incendie.

D'autres buts, caractéristiques et avantages de l'invention apparaîtront à la lecture de la description suivante donnée à titre non limitatif et qui se réfère aux figures annexées dans lesquelles :

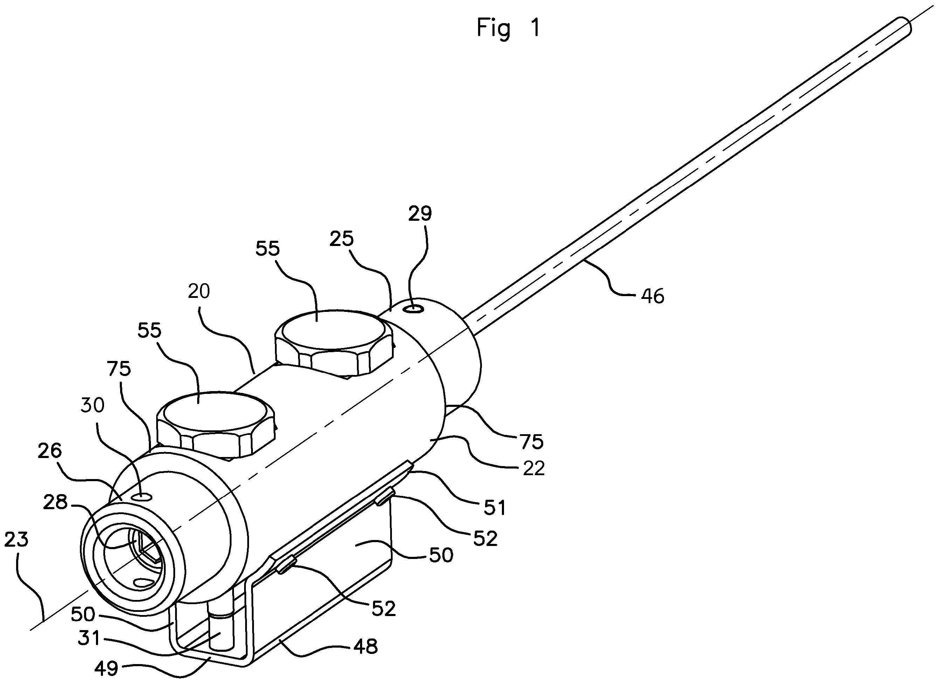

- la figure 1 est une vue schématique en perspective d'un débitmètre selon un mode de réalisation,

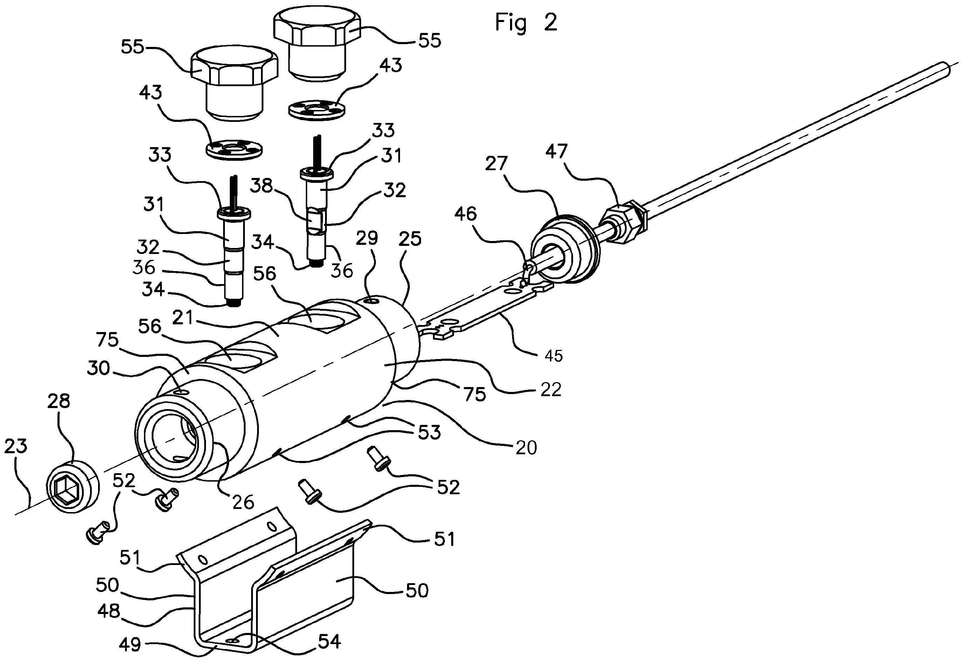

- la figure 2 est une vue schématique en perspective et en éclaté du débitmètre de la figure 1,
- la figure 3 est une vue schématique en coupe axiale d'une bouche d'incendie selon un mode de réalisation de l'invention incorporant un débitmètre,
- la figure 4 est une vue schématique de détail de la figure 3 illustrant plus particulièrement le débitmètre selon l'invention,
- la figure 5 est une vue schématique en perspective et en éclaté de la bouche d'incendie selon la figure 3.

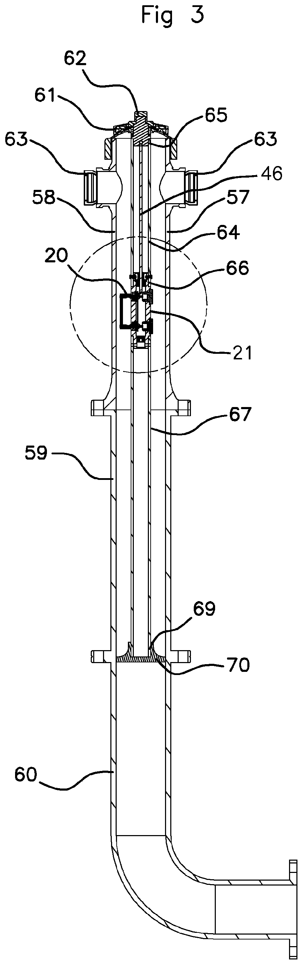

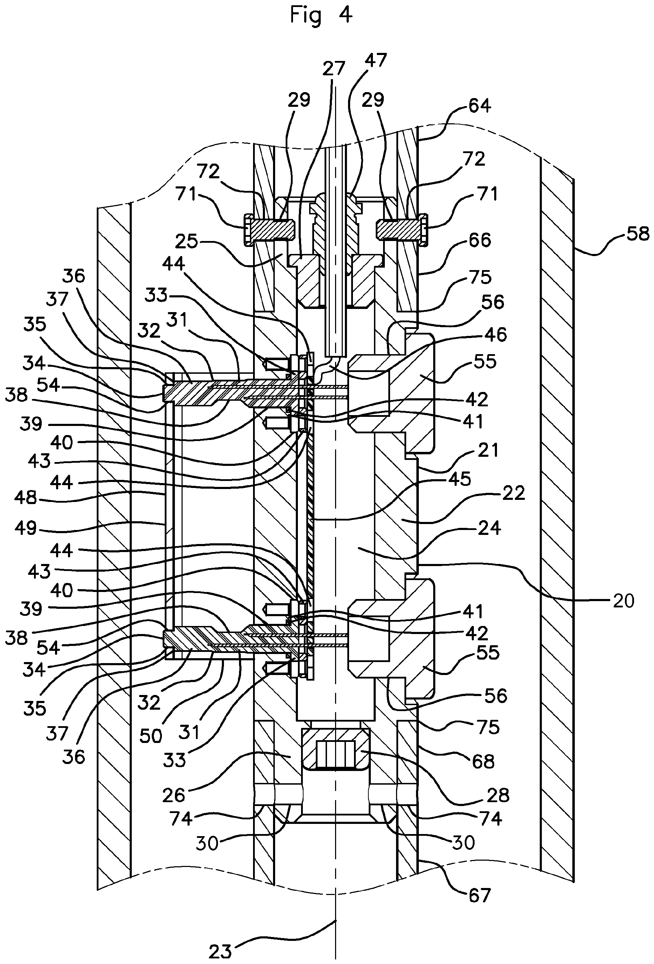

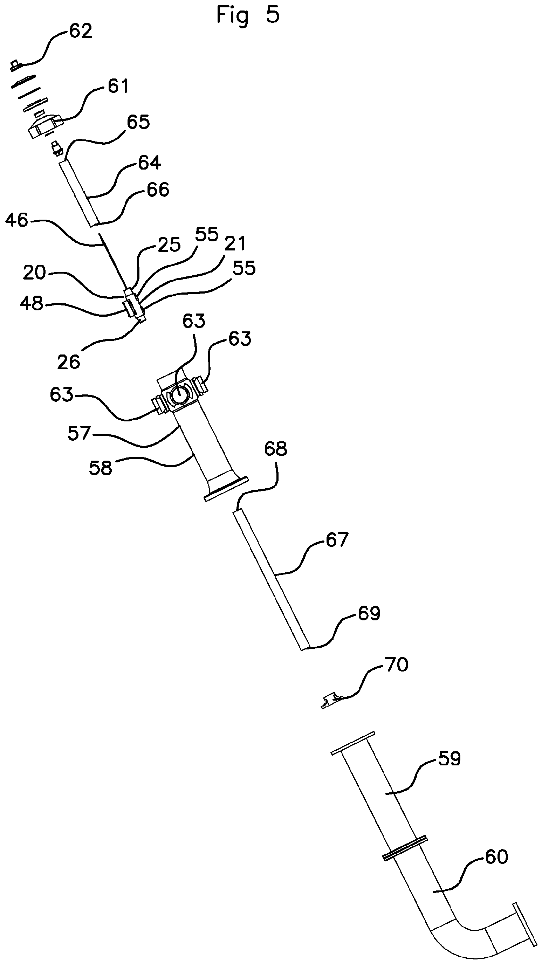

Un débitmètre 20 est représenté, selon un mode particulier de réalisation, aux figures 3 à 5 assemblé à deux tiges à l'intérieur d'un corps de bouche d'incendie. Ce débitmètre 20 comprend un corps 21 droit globalement tubulaire s'étendant axialement selon une direction 23 principale Ce corps 21 est formé par une paroi 22 tubulaire délimitant une enceinte 24 étanche, et dont les deux extrémités 25, 26 axiales sont bouchées de façon étanche par des bouchons 27, 28. Le corps 21 tubulaire peut être formé en tout matériau étanche au fluide dont le débit d'écoulement doit être mesuré, c'est-à-dire en particulier étanche à l'eau dans le cas d'une bouche d'incendie. Il peut s'agir en particulier d'un alliage métallique inoxydable, ou d'un matériau synthétique polymérique rigide.

Chaque extrémité 25, 26 axiale du corps 21 est agencée pour pouvoir être encastrée dans une tige tubulaire dont une extrémité vient en butée axiale contre un épaulement 75 extérieur de la paroi 22 tubulaire. Une première extrémité 25 axiale présente des trous 29 taraudés et l'autre extrémité 26 axiale présente des orifices 30 traversant l'épaisseur de la paroi 22 tubulaire.

Ce débitmètre comprend également deux transducteurs 31 à ultrasons représentés uniquement schématiquement sur les figures. Un tel transducteur à ultrasons est connu en soi et peut faire l'objet de nombreuses variantes de réalisation. Chaque transducteur 31 comprend une coque rigide enveloppant et renfermant les différents composants du transducteur et présentant une portion 32 principale rigide allongée selon une direction longitudinale du transducteur, une extrémité 33 proximale et une extrémité 34 distale. L'extrémité 33 proximale est plus large que la portion 32 principale et constitue la partie la plus large du transducteur 31. L'extrémité 34 distale est moins large que la portion 32 principale et constitue la partie la plus fine du transducteur 31. L'extrémité 34 distale étant moins large que la portion 32 principale du transducteur, un épaulement 37 distal relie la face 35 périphérique latérale de l'extrémité 34 distale à la face 36 périphérique latérale de la portion 32 principale du transducteur.

L'extrémité 33 proximale de chaque transducteur 31 est placée vers l'intérieur du corps 21 tubulaire tandis que la portion 32 principale traverse la paroi 22 du corps 38 et s'étend en saillie vers l'extérieur par rapport audit corps 21 tubulaire, de façon que la zone 38 active du transducteur 31 et l'extrémité 34 distale du transducteur 31 soient à l'extérieur du corps 21 tubulaire. Les deux zones 38 actives des deux transducteurs 31 sont en regard l'une de l'autre, alignées selon une direction parallèle à la direction 23 principale du corps 21 tubulaire, de sorte que les ondes ultrasonores émises par la zone 38 active de l'un des transducteurs 31 sont reçues par la zone 38 active de l'autre transducteur 31.

Le corps 21 tubulaire comprend deux orifices 39 diamétralement opposés traversant l'épaisseur de la paroi 22 tubulaire et dans lesquels les extrémités 33 proximales des transducteurs sont encastrées. Chaque orifice 39 comprend un chambrage 40 interne débouchant à l'intérieur de la paroi 22 tubulaire et adapté pour recevoir l'extrémité 33 proximale d'un transducteur et un chambrage 41 externe de plus faible largeur adapté pour loger un joint 42 au contact d'un épaulement de l'extrémité 33 proximale. L'extrémité 33 proximale est maintenue dans le chambrage 40 interne par une rondelle 43 assemblée à l'intérieur de la paroi 22 tubulaire du corps 21 par des vis 44, permettant de comprimer le joint 42 et de fixer le transducteur 31 en translation longitudinale par rapport au corps 21.

Le dispositif selon l'invention comprend également une carte 45 électronique dans l'enceinte 24 étanche ménagée à l'intérieur du corps 21. Cette carte 45 électronique est adaptée pour former des signaux de commande de l'un des transducteurs 31 (émetteur d'ondes ultrasonores) et traiter les signaux de mesure délivrés par l'autre transducteur 31 (recevant les ondes ultrasonores). La carte 45 électronique est reliée à l'extérieur de l'enceinte 24 étanche par des conducteurs 46 de connexion, formant une liaison 46 électrique, passant par une traversée étanche au fluide, du type presse-étoupe 47, de l'un 27 des bouchons d'extrémité axiale du corps 21 tubulaire du débitmètre. La carte 45 électronique est de forme globalement rectangulaire et est placée sur les deux rondelles 43. La carte 45 électronique est fixée à la paroi 22 tubulaire avec les rondelles 43 par les vis 44.

La liaison 46 électrique du débitmètre peut servir d'alimentation électrique du dispositif de mesure et de câble de transmission de signaux électriques vers la carte 45 électronique et/ou vers un dispositif électronique placé à l'extérieur du débitmètre 20.

Le débitmètre comprend en outre un étrier 48 s'étendant le long et à l'extérieur du corps 21 entre les deux transducteurs 31 qu'il relie, et présentant une âme 49 et deux ailes 50 dont les extrémités 51 sont fixées au corps 21 et évasées afin de s'ajuster à la forme cylindrique de la face extérieure de la paroi 22 tubulaire du corps 21.

Dans l'exemple représenté, l'étrier 48 est assemblé au corps 21 de façon que les ailes 50 de l'étrier 48 soient au moins sensiblement parallèles à la direction longitudinale des transducteurs 31. Les ailes 50 sont aussi parallèles à la direction principale du corps 21 tubulaire et sont écartées des transducteurs 31. L'âme 49 de l'étrier 48 est plane et orthogonale aux ailes 50 et à la direction longitudinale des transducteurs 31, et est parallèle à la direction principale du corps 21 tubulaire. Rien n'empêche de prévoir d'autres formes pour l'étrier 48, par exemple avec des ailes 50 inclinées par rapport à cette direction longitudinale et/ou une âme 49 à section droite transversale courbe, ou autre.

Les extrémités 51 évasées des ailes 50 sont fixées à la paroi 22 tubulaire du corps 21 par des vis 52 serrées dans des taraudages 53 conjugués de la paroi 22 tubulaire. L'âme 49 de l'étrier 48 comprend deux alésages 54 traversant l'épaisseur de l'âme 50 dans lesquels les extrémités 34 distales des transducteurs 31 sont insérées et encastrées sans jeu radial. Dans la variante représentée, l'épaulement 37 distal de la portion 32 principale est au contact de l'âme 49 de l'étrier 48, chaque transducteur 31 étant bloqué en translation entre le corps 21 et l'étrier 48.

Dans ce mode de réalisation, un fluide peut s'écouler à l'extérieur du corps 21 tubulaire selon une direction d'écoulement qui peut être parallèle à la direction 23 principale du corps 21 tubulaire. Le fluide peut donc s'écouler également dans l'espace entre ledit corps 21 et l'étrier 48 où sont placés les deux transducteurs 31.

Le corps 21 tubulaire comprend deux alésages 56 traversant sa paroi 22 diamétralement opposés aux deux orifices 39 de réception des transducteurs 31, pour l'insertion des transducteurs 31 à l'intérieur de l'enceinte 24. Deux bouchons étanches 55 sont ensuite placés dans ces alésages 56.

Un débitmètre selon ce mode de réalisation peut être fabriqué en réalisant le corps 21 avec les alésages 56, les orifices 39 et les chambrages 40, 41. On choisit deux transducteurs 31 et un étrier 48 de dimensions conjuguées. On place un joint 42 dans chaque chambrage 41 externe puis on insère un transducteur 31 par chaque alésage 56 dans l'orifice 39 diamétralement opposé jusqu'à ce que l'extrémité 33 proximale du transducteur 31 soit encastrée dans le chambrage 40 interne. On place ensuite une rondelle 43 au-dessus de chaque transducteur 31 puis une carte électronique 45 au-dessus de chaque rondelle 43 en la faisant passer par l'une 25 des extrémités axiales du corps 21. On fixe ensuite l'ensemble de la carte électronique 45 et de la rondelle 43 par les vis 44 sur la paroi 22 tubulaire à l'aide d'un outil passé à travers les alésages 56. On assemble ensuite les bouchons 27, 28 dans les extrémités du corps 21 et les bouchons 55 étanches dans les alésages 56.

Un tel débitmètre peut être intégré à toute vanne comprenant une tige tubulaire de commande d'un obturateur placée dans la vanne, cette tige tubulaire de commande étant en contact d'un écoulement de fluide.

L'intégration d'un tel débitmètre 20 dans une bouche d'incendie 57 est représentée aux figures 3 à 5. La bouche d'incendie 57 comprend un corps présentant trois tronçons distincts : un tronçon 58 supérieur hors-sol, un tronçon 59 intermédiaire souterrain mais présentant une extrémité supérieure affleurant le sol, et un tronçon 60 de raccord souterrain à une canalisation d'alimentation de la bouche d'incendie en eau sous pression. Le tronçon 58 supérieur de la bouche d'incendie s'étend verticalement selon une direction définissant une direction d'écoulement dans ce tronçon 58 supérieur. L'extrémité supérieure du tronçon 58 supérieur est surmontée d'un bonnet 61 présentant un actionneur 62. L'actionneur 62 est un organe de manœuvre permettant d'ouvrir ou de fermer un obturateur 70 placé entre le tronçon 59 intermédiaire et le tronçon 60 de raccord. Cet obturateur 70 permet d'interrompre la circulation d'eau dans le tronçon 59 intermédiaire et le tronçon 58 supérieur lorsqu'il est fermé par manœuvre de l'actionneur 62. L'obturateur 70 permet au contraire d'ouvrir la circulation d'eau dans le tronçon 59 intermédiaire et dans le tronçon 58 supérieur lorsqu'il est ouvert par manœuvre de l'actionneur 62. L'actionneur 62 est en général manœuvré en rotation à l'aide d'un outil tel qu'une clé conjuguée de cet actionneur 62.

Le tronçon 58 supérieur comprend également plusieurs prises d'eau 63 latérales par lesquelles l'eau sous pression peut être délivrée par la bouche d'incendie, et qui permettent le raccordement de conduites des équipements de pompiers. L'extrémité inférieure du tronçon 58 supérieur est assemblée à une extrémité supérieure du tronçon 59 intermédiaire. L'extrémité inférieure du tronçon 59 intermédiaire est assemblée à une extrémité supérieure du tronçon 60 de raccord. L'extrémité inférieure du tronçon 60 de raccord est assemblée à une canalisation permettant d'alimenter la bouche d'incendie 57 en eau sous pression.

Le tronçon 58 supérieur incorpore une tige 64 de commande menante, s'étendant à l'intérieur du tronçon 58 selon la direction de l'écoulement d'eau, verticalement selon l'axe du tronçon supérieur 58. L'extrémité 65 supérieure de la tige 64 de commande menante est accouplée à l'actionneur 62 de façon à pouvoir transmettre le mouvement de rotation exercé sur l'actionneur 62 à la tige 64 de commande menante. L'extrémité 66 inférieure de la tige 64 de commande menante est accouplée à l'extrémité 25 axiale du débitmètre 20 présentant le bouchon 27 incorporant la traversée 47 étanche pour la liaison 46 électrique.

Le débitmètre 20 est placé à l'intérieur du tronçon 58 supérieur de la bouche d'incendie 57 de façon que le corps 21 tubulaire s'étende selon la direction d'écoulement du fluide. Cette disposition permet ainsi d'accéder facilement au débitmètre lors d'une maintenance car l'actionneur 62 et la tige 64 de commande menante peuvent être démontées facilement du reste de la bouche d'incendie.

L'autre extrémité 26 axiale du débitmètre est accouplée à l'extrémité 68 supérieure d'une tige 67 de commande menée. Une autre extrémité 69 inférieure de la tige 67 de commande menée est accouplée à l'obturateur 70. Ainsi, le mouvement de rotation exercé sur l'actionneur 62 par un opérateur est transmis à l'obturateur 70 par l'intermédiaire de la tige 64 de commande menante, du corps 21 tubulaire du débitmètre, et de la tige 67 de commande menée, ce qui permet d'entraîner en rotation l'obturateur 70 par rapport au corps de la bouche d'incendie afin de contrôler l'écoulement de l'eau dans le tronçon 58 supérieur et dans le tronçon 59 intermédiaire.

Dans le mode de réalisation représenté, l'assemblage de l'extrémité 25 axiale du débitmètre avec l'extrémité 66 inférieure de la tige 64 de commande menante est réalisé par des vis 71 traversant chacune un alésage 72 de l'extrémité de la tige 64 de commande menante et vissée dans un trou taraudé 29 de l'extrémité 25 axiale du débitmètre 20. L'assemblage de l'extrémité 26 axiale du débitmètre avec l'extrémité 68 supérieure de la tige 67 de commande menée est réalisé par une goupille (non représentée sur les figures) introduite radialement dans des orifices 74 traversant radialement l'extrémité 68 supérieure de la tige 67 inférieure et les orifices 30 en regard de l'extrémité 26 axiale du débitmètre. Ces deux assemblages permettent de maintenir les tiges 64, 67 tubulaires en contact avec les épaulements 75 du débitmètre. Un joint d'étanchéité (non représenté) peut être interposé entre les épaulements 75 et les extrémités des tiges de commande pour assurer l'étanchéité. De même, un joint d'étanchéité (non représenté) peut être prévu au niveau des vis 71 d'accouplement et/ou de la goupille d'accouplement des tiges de commande tubulaires au corps 21 tubulaire du débitmètre.

La liaison 46 électrique du débitmètre s'étend dans la tige 64 de commande menante supérieure jusqu'au bonnet 61, ce dernier pouvant être doté d'un connecteur pour le branchement d'un équipement électrique externe (non représenté) ou d'un circuit électronique de transmission de données à distance, par exemple par radiofréquence avec un central de surveillance distant. Ainsi, la liaison électrique n'est pas en contact du fluide.

L'invention peut faire l'objet de nombreuses variantes de réalisation par rapport au mode de réalisation décrit ci-dessus et représenté sur les figures. En particulier, le corps du débitmètre portant les transducteurs peut ne pas être globalement tubulaire. Les extrémités axiales du débitmètre et des tiges de commande peuvent ne pas être tubulaires, dès lors qu'elles présentent des moyens d'assemblage conjugués permettant de les accoupler en rotation et/ou en translation pour la commande des déplacements de l'obturateur sous l'effet de la manœuvre de l'actionneur de la vanne. On peut également avoir plusieurs débitmètres intercalés le long de la tige de commande de l'obturateur de la vanne.

Dans certaines variantes de réalisation, l'étrier et le corps tubulaire du débitmètre peuvent former une unique pièce. Un tel débitmètre peut être obtenu par moulage par exemple.

Le maintien de l'extrémité 26 axiale du débitmètre avec l'extrémité 68 de la tige 67 de commande menée peut également être réalisé non pas par une goupille, mais par des vis introduites dans deux alésages diamétralement opposés de la tige 67 de commande menée et vissées dans deux trous taraudés de l'extrémité 26 axiale du débitmètre. En variante ou en combinaison, rien n'empêche d'assembler les extrémités du débitmètre avec l'une et/ou l'autre des deux tiges de commande par tout autre moyen d'accouplement, par exemple par collage ou par soudage.

Dans certaines variantes de réalisation non représentées, le dispositif de mesure comprend un unique transducteur à ultrasons dont la zone active est orientée pour émettre des ultrasons parallèlement à la direction d'écoulement du fluide et vers un dispositif de réflexion d'onde ultrasonore agencé pour réfléchir les ultrasons vers le transducteur à ultrasons.

Selon d'autres variantes non représentées, un dispositif de mesure d'un débitmètre peut également comprendre deux transducteurs à ultrasons présentant une zone active orientée pour émettre des ultrasons selon un axe incliné par rapport à la direction d'écoulement du fluide selon un angle compris entre 0° et 90°, valeurs non comprises. En particulier, la zone active des transducteurs est orientée pour émettre des ultrasons vers un dispositif de réflexion placé sur l'étrier du débitmètre. Ce dispositif de réflexion est agencé pour recevoir une onde ultrasonore provenant de l'un des transducteurs à ultrasons et la rediriger, après réflexion, vers l'autre transducteur à ultrasons. En outre, dans de telles variantes, l'extrémité distale de chaque transducteur à ultrasons peut ne pas être assemblée à l'étrier, de telle sorte qu'elle est positionnée entre le corps tubulaire et l'étrier du débitmètre.

En outre, dans certaines variantes de réalisation, le dispositif de mesure peut comprendre des transducteurs autres que des transducteurs à ultrasons.

Selon un autre mode de réalisation possible non représenté d'une vanne selon l'invention le corps tubulaire du débitmètre constitue lui-même une tige de commande de longueur égale à la tige de commande d'origine de la bouche d'incendie. Autrement dit, la tige de commande de la bouche d'incendie peut elle-même être modifiée pour faire office de corps tubulaire du débitmètre. Dans ce mode de réalisation, l'étrier est assemblé à la tige de commande. Les alésages, utilisés pour introduire les transducteurs et surmontés de bouchons étanches, ainsi que les chambrages sont alors usinés dans la tige de commande.

Selon un autre mode de réalisation possible non représenté d'une vanne selon l'invention une extrémité axiale du débitmètre placé à l'intérieur de la vanne est directement accouplée à l'actionneur de la vanne. L'autre extrémité axiale du débitmètre est alors assemblée à une tige de commande menée accouplée à l'obturateur de la vanne. Le débitmètre doit alors être agencé de sorte que la zone active des transducteurs puisse être au contact de l'écoulement de fluide vers l'une et/ou l'autre des prises d'eau.

L'invention peut par ailleurs faire l'objet d'autres applications que pour une bouche d'incendie, et pour lesquelles les mêmes problèmes se posent.

## Revendications

1. Vanne comprenant :
- un corps (58, 59, 60),
- un obturateur (70),
- une tige de commande de l'obturateur, cette tige de commande s'étendant à l'intérieur du corps (58, 59, 60) au moins pour partie dans une zone d'écoulement de fluide et comprenant au moins un débitmètre (20) dans ladite zone d'écoulement,
**caractérisée en ce que** la tige de commande comprend une première tige de commande, dite tige (64) de commande menante, accouplée à un actionneur (62) de la vanne, et une seconde tige (67) de commande, dite tige (67) de commande menée, accouplée à l'obturateur (70),
et **en ce que** ledit au moins un débitmètre (20) comprend :
- un corps (21) tubulaire présentant deux extrémités axiales, une première extrémité (25) axiale du débitmètre (20) étant assemblée à une extrémité (65) de la tige (64) de commande menante et une seconde extrémité (26) axiale du débitmètre (20) étant assemblée à une extrémité (68) de la tige (67) de commande menée,
- un dispositif de mesure de débit porté par le corps (21) tubulaire et étant associé au corps (21) tubulaire de façon à permettre la mesure d'un débit de fluide s'écoulant à l'extérieur du corps (21) tubulaire,
- une liaison électrique (46) s'étendant à l'extérieur du corps tubulaire et traversant le corps tubulaire par au moins une traversée étanche au fluide.

2. Vanne selon la revendication 1, **caractérisée en ce que** le corps (21) tubulaire du débitmètre (20) est étanche au fluide et renferme au moins un circuit électronique (45) du dispositif de mesure de débit.

3. Vanne selon l'une des revendications 1 à 2, **caractérisée en ce qu'**au moins l'une (25) des extrémités axiales (25, 26) dudit corps (21) tubulaire du débitmètre (20) comprend une traversée étanche au fluide.

4. Vanne selon l'une des revendications 1 à 3, **caractérisée en ce que** ledit dispositif de mesure de débit du débitmètre (20) comprend au moins un transducteur (31) ultrasonore s'étendant à l'extérieur dudit corps (21) tubulaire.

5. Vanne selon la revendication 4 **caractérisée en ce que** :
- ledit corps (21) tubulaire du débitmètre (20) est un corps tubulaire droit s'étendant selon un axe passant par les deux extrémités axiales (25, 26),
- chaque transducteur (31) ultrasonore dudit dispositif de mesure de débit est orthogonal à l'axe dudit corps (21) tubulaire.

6. Vanne selon l'une des revendications 4 ou 5, **caractérisée en ce que** le débitmètre (20) comprend un étrier (48) d'assemblage d'une extrémité distale (34) de chaque transducteur (31) audit corps (21) tubulaire.

7. Vanne selon l'une des revendications 1 à 6, **caractérisée** en ce l'obturateur (70) est un obturateur rotatif et en ce que le débitmètre (20) est adapté pour pouvoir transmettre des mouvements de rotation entre un actionneur (62) de la vanne et l'obturateur (70).

8. Vanne selon l'une des revendications 1 à 7, **caractérisée en ce qu'**une première extrémité (25) axiale du débitmètre est assemblée à un organe menant, et une seconde extrémité (26) axiale du débitmètre est assemblée à un organe mené d'entraînement de l'obturateur (70).

9. Vanne selon la revendication 1 à 8, **caractérisée en ce qu'**au moins la tige (64) de commande menante est une tige tubulaire et **en ce que** ladite liaison électrique (46) du débitmètre (20) s'étend dans la tige (64) de commande menante tubulaire.

10. Vanne selon l'une des revendications 1 à 9 **caractérisée en ce qu'**il s'agit d'une bouche d'incendie.

## Patentansprüche

1. Ventil, umfassend:
- einen Körper (58, 59, 60),
- einen Verschluss (70),
- einen Steuerstab des Verschlusses, wobei sich dieser Steuerstab im Inneren des Körpers (58, 59, 60) mindestens zum Teil in einer Fluidfließzone erstreckt und mindestens einen Durchflussmesser (20) in der Fließzone umfasst,
**dadurch gekennzeichnet, dass** der Steuerstab einen ersten Steuerstab, bezeichnet als führender Steuerstab (64) umfasst, der an einen Aktuator (62) des Ventils gekoppelt ist, und einen zweiten Steuerstab (67), bezeichnet als geführter Steuerstab (67), der an den Verschluss (70) gekoppelt ist,
und dass der mindestens eine Durchflussmesser (20) umfasst:
- einen rohrförmigen Körper (21), aufweisend zwei axiale Enden, wobei ein erstes axiales Ende (25) des Durchflussmessers (20) mit einem Ende (65) des führenden Steuerstabs (64) verbunden ist und ein zweites axiales Ende (26) des Durchflussmessers (20) mit einem Ende (68) des geführten Steuerstabs (67) verbunden ist,
- eine Durchflussmessvorrichtung, die von dem rohrförmigen Körper (21) getragen wird und dem rohrförmigen Körper (21) derart zugeordnet ist, dass die Messung eines Durchflusses von Fluid erlaubt wird, das außerhalb des rohrförmigen Körpers (21) fließt,
- eine elektrische Verbindung (46), die sich außerhalb des rohrförmigen Körpers erstreckt und den rohrförmigen Körper durch mindestens einen fluiddichten Durchgang durchquert.

2. Ventil nach Anspruch 1, **dadurch gekennzeichnet, dass** der rohrförmige Körper (21) des Durchflussmessers (20) fluiddicht ist und mindestens einen elektronischen Schaltkreis (45) der Durchflussmessvorrichtung umschließt.

3. Ventil nach einem der Ansprüche 1 bis 2, **dadurch gekennzeichnet, dass** mindestens eins (25) der axialen Enden (25, 26) des rohrförmigen Körpers (21) des Durchflussmessers (20) einen fluiddichten Durchgang umfasst.

4. Ventil nach einem der Ansprüche 1 bis 3, **dadurch gekennzeichnet, dass** die Durchflussmessvorrichtung des Durchflussmessers (20) mindestens einen Ultraschallwandler (31) umfasst, der sich außerhalb des rohrförmigen Körpers (21) erstreckt.

5. Ventil nach Anspruch 4, **dadurch gekennzeichnet, dass**:
- der rohrförmige Körper (21) des Durchflussmessers (20) ein gerader rohrförmiger Körper ist, der sich gemäß einer Achse erstreckt, die durch die zwei axialen Enden (25, 26) verläuft,
- jeder Ultraschallwandler (31) der Durchflussmessvorrichtung orthogonal zur Achse des rohrförmigen Körpers (21) ist.

6. Ventil nach einem der Ansprüche 4 oder 5, **dadurch gekennzeichnet, dass** der Durchflussmesser (20) einen Verbindungsbügel (48) eines distalen Endes (34) jedes Transducers (31) am rohrförmigen Körper (21) umfasst.

7. Ventil nach einem der Ansprüche 1 bis 6, **dadurch gekennzeichnet, dass** der Verschluss (70) ein rotierender Verschluss ist und dass der Durchflussmesser (20) imstande ist, Rotationsbewegungen zwischen einem Aktuator (62) des Ventils und dem Verschluss (70) übertragen zu können.

8. Ventil nach einem der Ansprüche 1 bis 7, **dadurch gekennzeichnet, dass** ein erstes axiales Ende (25) des Durchflussmessers mit einem führenden Organ verbunden ist und ein zweites axiales Ende (26) des Durchflussmessers mit einem geführten Antriebsorgan des Verschlusses (70) verbunden ist.

9. Ventil nach Anspruch 1 bis 8, **dadurch gekennzeichnet, dass** mindestens der führende Steuerstab (64) ein rohrförmiger Stab ist und dass sich die elektrische Verbindung (46) des Durchflussmessers (20) in dem rohrförmigen führenden Steuerstab (64) erstreckt.

10. Ventil nach einem der Ansprüche 1 bis 9, **dadurch gekennzeichnet, dass** es sich um einen Feuerhydranten handelt.

## Claims

1. Valve comprising:
- a body (58, 59, 60),
- a closure member (70),
- a closure member control rod, said control rod extending inside the body (58, 59 60) at least partially within a fluid flow area and comprising at least one flowmeter (20) in said flow area,
**characterised in that** said control rod comprises a first control rod, named driving control rod (64), coupled to an actuator (62) of the valve, and a second control rod (67), named driven control rod (67), coupled to the closure member (70),
and **in that** said at least one flowmeter (20) comprises:
- a tubular body (21) having two axial ends, a first axial end (25) of the flowmeter (20) being mounted on one end (65) of the driving control rod (64) and a second axial end (26) of the flowmeter (20) being mounted on a second end (68) of the driven control rod (67),
- a flow measuring device supported by the tubular body (21) and associated with the tubular body (21) so as to enable a flow of fluid flowing outside the tubular body (21) to be measured,
- an electrical connection (46) extending outside of the tubular body and passing through the tubular body by at least one fluid-tight passage.

2. Valve according to claim 1, **characterised in that** the tubular body (21) of the flowmeter (20) is fluid-tight and includes at least one electronic circuit (45) of the flow measuring device.

3. Valve according to any one of claims 1 to 2, **characterised in that** at least one (25) of the axial ends (25, 26) of said tubular body (21) of the flowmeter (20) comprises a fluid-tight passage.

4. Valve according to any one of claims 1 to 3, **characterised in that** said flow measuring device of the flowmeter (20) comprises at least one ultrasonic transducer (31) extending outside said tubular body (21).

5. Valve according to claim 4, **characterised in that**:
- said tubular body (21) of the flowmeter (20) is a straight tubular body extending along an axis passing through the two axial ends (25, 26),
- each ultrasonic transducer (31) of said flow measuring device is orthogonal to the axis of said tubular body (21).

6. Valve according to any one of claims 4 or 5, **characterised in that** the flowmeter (20) comprises a U-clamp (48) for mounting a distal end (34) of each transducer (31) on said tubular body (21).

7. Valve according to any one of claims 1 to 6, **characterised in that** the closure member (70) is a rotary closure member, and **in that** the flowmeter (20) is adapted to be able to transmit rotational movements between an actuator (62) of the valve and the closure member (70).

8. Valve according to any one of claims 1 to 7, **characterised in that** a first axial end (25) of the flowmeter is mounted on a driving member and a second axial end (26) of the flowmeter is mounted on a driven member for driving the closure member (70).

9. Valve according to claims 1 to 8, **characterised in that** at least the driving control rod (64) is a tubular rod, and **in that** said electrical connection (46) of the flowmeter (20) extends into the tubular driving control rod (64).

10. Valve according to any one of claims 1 to 9, **characterised in that** it is a fire hydrant.
